# EUROPÄISCHE PATENTSCHRIFT

(11) **EP 0 767 907 B1**
(45) Veröffentlichungstag und Bekanntmachung des Hinweises auf die Patenterteilung: **09.07.2003**
(21) Anmeldenummer: 96907320.4
(22) Anmeldetag: 26.03.1996
(51) Int. Cl.: G01N 27/409

(54) **DICHTSITZ FÜR EIN ELEKTROCHEMISCHES SENSORELEMENT**
SEALING SEAT FOR AN ELECTROCHEMICAL SENSOR
SIEGE D'ETANCHEITE POUR ELEMENT DE DETECTION ELECTROCHIMIQUE

(30) Priorität: 29.04.1995 DE 19515897
(43) Veröffentlichungstag der Anmeldung: 16.04.1997
(73) Patentinhaber: ROBERT BOSCH GMBH, 70442 Stuttgart (DE)
(72) Erfinder: FRIESE, Karl-Hermann, D-71229 Leonberg (DE); WEYL, Helmut, D-71701 Schwieberdingen (DE); FRIES, Romuald, D-71287 Weissach (DE)
(86) Internationale Anmeldenummer: DE9600574
(87) Internationale Veröffentlichungsnummer: WO96035119

(56) Entgegenhaltungen:
- DE-A- 2 748 461
- DE-A- 3 226 603
- DE-A- 3 227 609
- DE-A- 3 927 283

## Beschreibung

### Stand der Technik

Die Erfindung geht aus von einer Anordnung eines Sensorelements eines elektrochemischen Meßfühlers in einem metallischen Gehäuse nach der Gattung des Hauptanspruchs. Die Sensorelemente der elektrochemischen Meßfühler sind beispielsweise in der sogenannten Fingerbauform ausgeführt. Das Sensorelement ist ein Festelektrolytkörper, der als geschlossenes Rohr ausgeführt und in einem metallischen Gehäuse mit einem metallischen Dichtring gasdicht festgelegt ist. Bei potentialfreien Fingersonden darf der metallische Dichtring die äußere Leiterbahn nicht kontaktieren. Dazu ist die Leiterbahn mit einer elektrisch isolierenden Schicht überzogen, auf die der Dichtring drückt. Ein Eindrücken der Kanten des Dichtrings in die Isolationsschicht würde diese zerstören und die Potentialfreiheit dadurch aufgehoben werden. Dies zu verhindern, ist Aufgabe der vorliegenden Erfindung.

Das Dokument DE 27 48 461 A1 beschreibt einen elektrochemischen Meßfühler, bei dem zur Abdichtung zwischen einem Sensorelement und einem Gehäuse ein leitfähiges Verschlußmaterial vorgesehen ist. Das Gehäuse weist einen als erhabene Kreisringfläche ausgeführten Dichtsitz auf, der in flächigem Kontakt zu dem Verschlußmaterial steht. Die mit dem Verschlußmaterial in Kontakt stehende Dichtfläche des Sensorelements ist ebenfalls gekrümmt ausgeführt.

Das Dokument DE 32 27 609 A1 beschreibt ein in einem Gehäuse angeordnetes Sensorelement. Zur Abdichtung ist zwischen Sensorelement und Gehäuse ein Dichtring vorgesehen. Der Dichtring liegt auf einer kegelförmigen Dichtfläche des Gehäuses und des Sensorelements jeweils flächig auf.

### Vorteile der Erfindung

Die Erfindung mit den kennzeichnenden Merkmalen des Hauptanspruchs hat den Vorteil, daß die Dichtring-Auflagelinie in der Mitte des Dichtsitzkegels am Sensorelement liegt und eine ausgeprägte flächenhafte Belastung im Fügebereich zwischen Dichtring und sensorelement vorliegt. Dadurch ist eine erhöhte Fertigungssicherheit gewährleistet und der Meßfühler hinsichtlich Gasdichtheit und Benzinfestigkeit verbessert. Die ausgeprägte flächenhafte Belastung (breites Tragbild des Dichtrings) verhindert mögliche Rißbildungen in der Isolationsschicht. Dadurch wird außerdem eine Diffusion von Schwermetallionen in die Isolationsschicht verhindert, wodurch der Isolationswiderstand der Isolationsschicht auch im thermisch belasteten Dauerbetrieb erhalten bleibt.

Besonders vorteilhaft ist es, den Radius zur Auflage des Dichtrings mit r = 1 mm auszuführen. Dadurch entsteht ein guter Dichtsitz, der ebenfalls zu keiner Verformung des Dichtrings führt. Damit sich der Dichtring tangential an der der vom Radius gebildetet linienförmigen Kreisauflage ausrichten kann, ist angrenzend an den Radius eine Freifläche für den Dichtring ausgebildet. Zweckmäßig ist, die Freifläche kegelförmig auszuführen.

### Zeichnung

Zwei Ausführungsbeispiele der Erfindung sind in der Zeichnung dargestellt und in der nachfolgenden Beschreibung näher erläutert. Es zeigen Figur 1 einen Schnitt durch einen Ausschnitt eines elektrochemischen Meßfühlers, Figur 2 einen vergrößerten Ausschnitt X mit einem ersten Ausführungsbeispiel eines erfindungsgemäßen Dichtsitzes und Figur 3 den Ausschnitt X mit einem zweiten Ausführungsbeispiel eines erfindungsgemäßen Dichtsitzes

### Ausführungsbeispiele

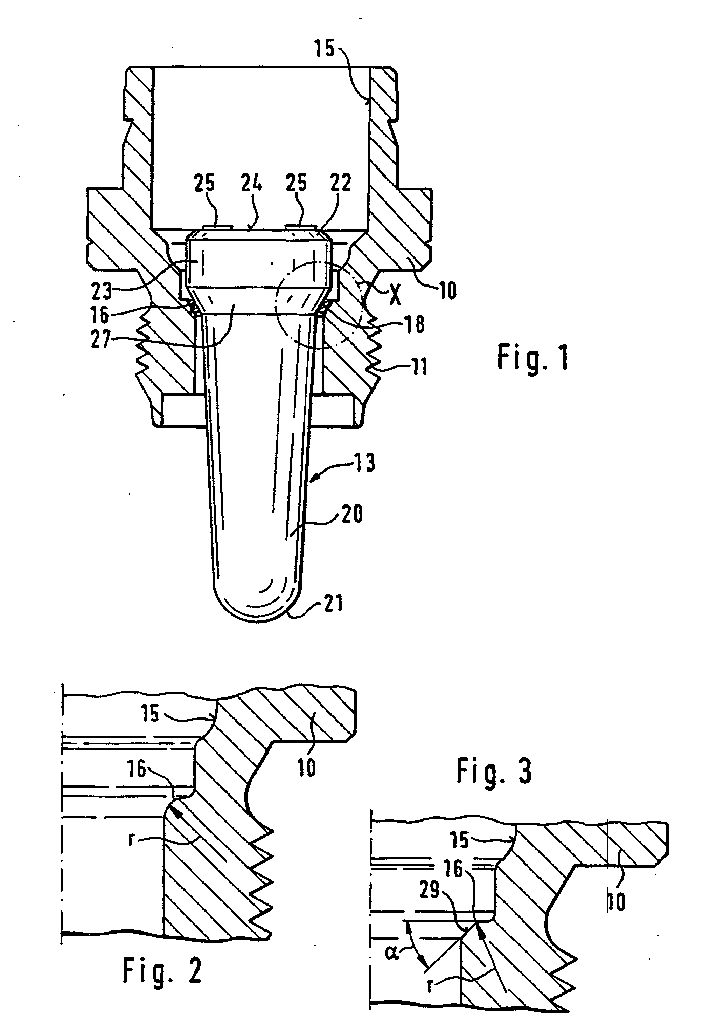

Der in einem Ausschnitt dargestellte elektrochemische Meßfühler gemäß Figur 1 hat ein metallisches Gehäuse 10 mit einem Gewinde 11 als Befestigungsmittel für den Einbau in ein nicht dargestelltes Abgasrohr und ein Sensorelement 13. Das Gehäuse 10 hat eine Längsbohrung 15 mit einem Dichtsitz 16. Auf dem Dichtsitz 16 sitzt das Sensorelement 13 mit einem metallischen Dichtring 18 auf.

Das Sensorelement 13 ist ein rohrförmiger Festelektrolytkörper 20, dessen meßgasseitiger Endabschnitt 21 verschlossen ist. Am anschlußseitigen Endabschnitt 22 ist der Festelektrolytkörper 20 als wulstförmiger Kopf 23 mit einer ringförmigen Stirnfläche 24 ausgeführt.

Auf der dem Meßgas ausgesetzten Außenseite ist am Festelektrolytkörper 20 eine nicht näher dargestellte Meßelektrode angeordnet. Im Innern des Festelektrolytkörpers 20 befindet sich eine dem Referenzgas, zum Beispiel Luft ausgesetzte, ebenfalls nicht näher dargestellte Referenzelektrode. Meßelektrode und Referenzelektrode sind jeweils mit ebenfalls nicht dargestellten Leiterbahnen zu auf der Stirnfläche 24 angeordneten Elektrodenkontakten 25 geführt.

Am wulstförmigen Kopf 23 ist ein sich zum Meßgas hin verjüngender Dichtkegel 27 ausgebildet, mit dem das Sensorelement 20 auf dem Dichtring 18 aufliegt. Der Dichtsitz 16, der Dichtring 18 und der Dichtkegel 27 bilden eine Dichtzone X, die als vergrößerter Ausschnitt jeweils in Figur 2 und 3 dargestellt ist.

Bei einem ersten Ausführungsbeispiel gemäß Figur 2 ist der Dichtsitz 16 mit einem Radius r von beispielsweise r = 1 mm ausgeführt. Etwa in der Mitte der vom Radius r gebildeten erhabenen Kreisringfläche liegt der Dichtring 18 ebenfalls etwa mit der Mitte seiner Kreisringfläche linienförmig auf. Dadurch kann sich der Dichtring 18 am Radius r tangential ausrichten, so daß sich die andere Fläche des Dichtring 18 an den Dichtkegel 27 anpaßt. Es entsteht eine ausgeprägte flächenhafte Belastung im Fügebereich zwischen Dichtring 18 und Dichtkegel 27. Dadurch wird vermieden, daß der Dichtkegel 27 nicht einseitig auf einer Kante des Dichtrings 18 aufliegt. Die flächenhafte Belastung im Fügebreich zwischen Dichtring 18 und Dichtkegel 27 gewährleistet somit, daß die Isolationschicht für die an der äußeren Oberfläche verlaufende Elektrodenleiterbahn nicht beschädigt oder zerstört wird.

Ein zweites Ausführungsbeispiel zur Ausbildung des Dichtsitzes 16 geht aus Figur 3 hervor. Dort ist die Auflage für den Dichtring mit einem Radius r von beispielsweise r = 0,6 mm ausgeführt. Zum Meßgas hin schließt sich an den Radius r eine Freifläche 29 mit einem sich kegelförmig verjüngender Verlauf der Längsbohrung 15 an, wobei der Kegel einen Winkel α von beispielsweise 45° aufweist. Die Freifläche 29 garantiert, daß sich der Dichtring 18 auch hier an der von Radius r gebildeten Auflage tangential ausrichten kann.

## Patentansprüche

1. Anordnung eines Sensorelements (13) eines elektrochemischen Meßfühlers in einem metallischen Gehäuse (10), bei dem das Sensorelement (13) in Form eines einseitig geschlossenen Rohres einen Dichtkegel (27) aufweist, mit dem das Sensorelement (13) auf einem metallischen Dichtring (18) aufliegt, wobei der Dichtring (18) auf einer dem Sensorelement (13) abgewandten Seite auf einem am Gehäuse (10) ausgebildeten Dichtsitz (16) aufliegt, **dadurch gekennzeichnet, dass** der Dichtsitz (16) als erhabene Kreisringfläche mit einem Radius (r) ausgeführt ist, und dass der Dichtring (18) linienförmig auf der erhabenen Kreisringfläche des Dichtsitzes (16) aufliegt.

2. Anordnung nach Anspruch 1, **dadurch gekennzeichnet, daß** der Radius (r) eine Abmessung von 0,5 bis 1,5 mm, vorzugsweise 1 mm aufweist.

3. Anordnung nach Anspruch 1, **dadurch gekennzeichnet, daß** der Dichtring (18) annähernd mit der Mitte seiner Kreisringfläche linienförmig auf der erhabenen Kreisringfläche des Dichtsitzes (16) aufliegt.

4. Anordnung nach Anspruch 3, **dadurch gekennzeichnet, daß** der Dichtring (18) annähernd in der Mitte der von dem Radius (r) gebildeten erhabenen Kreisringfläche aufliegt.

5. Anordnung nach Anspruch 1, **dadurch gekennzeichnet, daß** zum geschlosssenen Ende des Sensorelements (10) hin sich an den Radius (r) eine Freifläche (29) für den Dichtring (18) anschließt, so daß sich der Dichtring (18) tangential am Radius (r) ausrichten kann.

6. Anordnung nach Anspruch 5, **dadurch gekennzeichnet, daß** die Freifläche (29) kegelförmig mit einem Winkel α von vorzugsweise 45 ° verläuft.

## Claims

1. Arrangement of a sensor element (13) of an electrochemical measuring probe in a metallic housing (10), in which the sensor element (13), which is in the form of a tube which is closed on one side, has a sealing cone (27), by means of which the sensor element (13) bears against a metallic sealing ring (18), the sealing ring (18), on a side which is remote from the sensor element (13), bearing against a sealing seat (16) formed on the housing (10), **characterized in that** the sealing seat (16) is designed as a raised annular surface with a radius (r), and **in that** the sealing ring (18) bears linearly against the raised annular surface of the sealing seat (16).

2. Arrangement according to Claim 1, **characterized in that** the radius (r) has a dimension of from 0.5 to 1.5 mm, preferably 1 mm.

3. Arrangement according to Claim 1, **characterized in that** approximately the centre of the annular surface of the sealing ring (18) bears linearly against the raised annular surface of the sealing seat (16).

4. Arrangement according to Claim 3, **characterized in that** the sealing ring (18) bears approximately against the centre of the raised annular surface formed by the radius (r).

5. Arrangement according to Claim 1, **characterized in that** towards the closed end of the sensor element (10) the radius (r) is adjoined by a free surface (29) for the sealing ring (18), so that the sealing ring (18) can be oriented tangentially with respect to the radius (r).

6. Arrangement according to Claim 5, **characterized in that** the free surface (29) runs conically at an angle α of preferably 45°.

## Revendications

1. Montage d'un élément capteur (13) d'une sonde électrochimique dans un boîtier métallique (10) selon lequel l'élément capteur (13) a la forme d'un tube fermé d'un côté constituant un cône d'étanchéité (27) par lequel l'élément capteur (13) s'appuie dans un joint d'étanchéité (18) métallique,
le joint d'étanchéité (18) s'appuyant sur son côté opposé à l'élément capteur (13) sur un siège d'étanchéité (16) formé sur le boîtier (10),
**caractérisé en ce que**
le siège d'étanchéité (16) est réalisé sous la forme d'une surface annulaire circulaire relevée de rayon r et le joint d'étanchéité (18) s'appuie suivant un tracé linaire sur la surface annulaire circulaire en relief du siège d'étanchéité (16).

2. Montage selon la revendication 1,
**caractérisé en ce que**
le rayon r est compris entre 0,5 et 1,5 mm et est égal de préférence à 1 mm.

3. Montage selon la revendication 1,
**caractérisé en ce que**
le joint d'étanchéité (18) s'appuie sensiblement au milieu de sa surface annulaire circulaire, de façon linéaire sur la surface annulaire circulaire en relief du siège d'étanchéité (16).

4. Montage selon la revendication 3,
**caractérisé en ce que**
le joint d'étanchéité (18) s'appuie sensiblement au milieu de la surface annulaire circulaire en relief de rayon r.

5. Montage selon la revendication 1,
**caractérisé en ce que**
du côté de l'extrémité fermée de l'élément capteur (13), le rayon r se poursuit par une surface dégagée (28) pour le joint d'étanchéité (18) de sorte que le joint d'étanchéité (18) peut s'aligner tangentiellement par rapport au rayon r.

6. Montage selon la revendication 5,
**caractérisé en ce que**
la surface dégagée (29) est de forme conique avec un angle α égal de préférence à 45°.
